# EUROPÄISCHE PATENTSCHRIFT

(11) **EP 3 001 081 B1**
(45) Veröffentlichungstag und Bekanntmachung des Hinweises auf die Patenterteilung: **24.10.2018**
(21) Anmeldenummer: 14186667.3
(22) Anmeldetag: 26.09.2014
(51) Int. Cl.: F16K 31/60, F16K 1/04

(54) **Eckventil mit Handrad**
Angle valve with handwheel
Vanne équerre doté d'un volant à main

(43) Veröffentlichungstag der Anmeldung: 30.03.2016
(73) Patentinhaber: Geberit International AG, 8645 Jona (CH)
(72) Erfinder: Trecco, Alessandro, 8713 Uerikon (CH); Marin, Thomas, 8636 Wald (CH)
(74) Vertreter: Frischknecht, Harry Ralph

(56) Entgegenhaltungen:
- EP-A1- 2 732 833
- WO-A1-2012/128645
- DE-A1-102010 023 574
- US-A- 2 699 347
- US-A- 4 417 601
- US-A- 4 796 348
- US-A- 5 887 850
- US-A1- 2006 011 880

## Beschreibung

### TECHNISCHES GEBIET

Die vorliegende Erfindung betrifft ein Ventil, insbesondere ein Eckventil, mit einem Handrad nach dem Oberbegriff von Anspruch 1.

### STAND DER TECHNIK

Aus dem Stand der Technik sind Eckventile für Spülkästen bekannt geworden. Derartige Eckventile werden einerseits an die Versorgungsleitung des Wassernetzes angeschlossen und andererseits wird eine Einlaufgarnitur an das Eckventil angeschlossen. Über die Einlaufgarnitur wird der Zufluss von Wasser in den Spülkasten geregelt. Bei einem Defekt an der Einlaufgarnitur kann die Wasserzufuhr über das Eckventil abgestellt werden.

Ähnliche oder gleiche Eckventile sind auch im Zusammenhang mit anderen Armaturen, beispielsweise mit Waschtischen, bekannt geworden.

Aus der DE 20 2013 101 794 ist ein Eckventil mit einem Handrad bekannt geworden. Das Handrad ist an einer Rille am Gehäuse gelagert und dient der Bereitstellung einer Drehung auf einen Ventilstössel. Über die fest am Handrad angeformte Rille wird eine Schnappverbindung zwischen Ventilgehäuse und Handrad bereitgestellt.

Das Handrad der DE 20 2013 101 794 hat den Nachteil, dass es unbeabsichtigt vom Gehäuse getrennt werden kann. Wird der Ventilstössel beispielsweise in seine Freigabelage oder darüber hinaus bewegt, so steht dieser am Grund des Handrades an und drückt dieses in Richtung der Drehachse unbeabsichtigt vom Gehäuse des Ventils weg. Gerade bei sehr engen Verhältnissen, wie sich typischerweise in einem Spülkasten vorherrschen, ist dies ein Nachteil, weil sowohl das Handrad als auch der Ventilstössel in den Spülkasten fallen können und nicht mehr oder nur mit grossen Aufwand aus dem Spülkasten wieder herausnehmbar sind.

Auch Dokument US 4,417,601 offenbart ein Eckventil mit Handrad.

### DARSTELLUNG DER ERFINDUNG

Ausgehend von diesem Stand der Technik liegt der Erfindung eine Aufgabe zugrunde, ein Ventil, insbesondere ein Eckventil, anzugeben, welches die Nachteile des Standes der Technik überwindet. Insbesondere soll ein Ventil angegeben werden, bei welchem ein unbeabsichtiges Trennen des Handrades vom Ventil bzw. ein unbeabsichtigtes Herausdrehen des Ventilstössels verhindert wird.

Diese Aufgabe löst der Gegenstand nach Anspruch 1. Demgemäss umfasst ein Ventil ein Ventilgehäuse, das einen Durchflusskanal begrenzt, welcher sich von einem Ventileingang bis zu einem Ventilausgang erstreckt, ein im Durchflusskanal angeordneter Ventilsitz, ein mit dem Ventilsitz zusammenarbeitenden Ventilstössel, und ein mit dem Ventilstössel und/oder mit dem Ventilgehäuse verbindbares Aktuatorelement zur Betätigung des Ventilstössels. Der Ventilstössel umfasst einen mit dem Ventilsitz zusammenarbeitenden Dichtabschnitt, einen Lagerungsabschnitt und einen Betätigungsabschnitt, mit welchem das Aktuatorelement zusammenarbeitet. Das Ventilgehäuse weist weiter eine Aufnahme auf, in welchem der Ventilstössel mit dem Lagerungsabschnitt im Ventilgehäuse entlang einer Längsachse verschieblich bzw. um die und entlang der Längsachse verschieblich gelagert ist. Das Aktuatorelement umfasst ein relativ zum Aktatuorelement von einer Freigabelage in eine Sicherungslage bewegbares Sicherungselement, mit welchem das Aktuatorelement zum Ventilgehäuse und/oder zum Ventilstössel sicherbar ist.

Durch das Sicherungselement, welches relativ zum Aktuatorelement von der Freigabelage in die Sicherungslage und umgekehrt verschiebbar ist, wird dem Installateur ein Element bereitgestellt, welches bewusst betätigt werden kann. Wenn das Sicherungselement in der Sicherungslage ist, so ist es nicht möglich, das Aktuatorelement sowie ggf. den Ventilstössel unbeabsichtigt vom Ventilgehäuse zu trennen. Die Trennung kann nur dann erfolgen, wenn das Sicherungselement durch den Installateur in die Freigabelage bewegt wird und er sich somit der durchzuführenden Manipulationen bewusst ist.

Das Ventil ist vorzugsweise ein Eckventil, wobei der Durchflusskanal um 90° umgelenkt wird und wobei der Ventileingang in einer ersten Ebene liegt und der Ventilausgang in einer zur ersten Ebene um 90° winklig stehenden zweiten Ebene liegt. Im Bereich des Ventileingangs und im Bereich des Ventilausgangs sind bevorzugt Gewinde angeordnet, über welche das Ventil mit einer Wasserleitung oder einer Armatur, wie einem Einlaufventil in einem Spülkasten verbunden werden kann.

Der Lagerungsabschnitt des Ventilstössels weist vorzugsweise die Form eines Aussengewindes, insbesondere eines Feingewindes und die Aufnahme ist vorzugsweise ein zum Aussengewinde passendes Innengewinde.

Vorzugsweise ist das Sicherungselement separat vom Aktuatorelement ausgebildet. Das heisst, dass das Sicherungselement und das Aktuatorelement nicht einstückig miteinander in Verbindung sind, sondern zwei verschiedene Teile sind. Das separat vom Aktuatorelement ausgebildete Sicherungselement ist am Aktatuorelement bewegbar gelagert. Das Sicherungselement lässt sich also relativ zum feststehenden Aktuatorelement verschieben. Die Lagerung ist vorzugsweise derart ausgebildet, dass das Sicherungselement zwischen der Freigabelage und der Sicherungslage bewegbar ist, aber nicht einfach vom Aktuatorelement getrennt werden kann.

Besonders bevorzugt umfasst das Aktuatorelement eine Längsführung, in welcher und entlang welcher das Sicherungselement bewegbar gelagert ist. Die Längsführung ist dabei vorteilhafterweise integraler Bestandteil des Aktuatorelementes und rechtwinklig zur besagten Längsachse orientiert.

Das Sicherungselement greift in seiner Sicherungslage derart in das Ventilgehäuse ein, so dass eine Drehbewegung um die Längsachse, nicht aber eine Längsbewegung entlang der Längsachse zwischen dem Aktuatorelement und dem Ventilgehäuse ermöglicht wird. Die Verbindung zwischen Aktuatorelement und Ventilstössel ist derart ausgebildet, dass eine Drehbewegung vom Aktuatorelement auf den Ventilstössel übertragbar ist und dass der Ventilstössel entlang der Längsachse relativ zum Aktuatorelement verschiebbar ist.

Vorzugsweise umfasst das Ventilgehäuse eine Ausnehmung oder einen Anschlag, in welche das Sicherungselement in seiner Sicherungslage eingreift und mit welcher das Sicherungselement in seiner Freigabelage nicht im Eingriff steht. Die Ausnehmung ist vorzugsweise integraler Bestandteil des Ventilgehäuses.

Die besagte Ausnehmung am Ventilgehäuse ist besonders bevorzugt eine um die Längsachse des Ventilstössels umlaufende an der Aussenseite des Ventilgehäuses angeordnete Rille ist. In diese Rille greift dann das Sicherungselement in der Sicherungslage ein. Die Rille und das Sicherungselement sind dabei derart ausgebildet, dass sich das Sicherungselement relativ zur Rille um die Längsachse herum bewegen kann.

Besonders bevorzugt greift das Sicherungselement an zwei bezüglich der Längsachse gegenüberliegenden Stellen in die besagte Rille ein. Somit wirkt das Sicherungselement symmetrisch auf das Ventilgehäuse.

Die Rille wird seitlich durch je zwei in Richtung der Längsachse beabstandet zueinander angeordnete Rillenflanken begrenzt, welche die Rillenbreite in Richtung der Längsachse definieren. Das Sicherungselement kommt zwischen die beiden Rillenflanken zu liegen. Folglich lässt sich das Aktuatorelement um die Längsachse verschieben und es erfährt entlang der Längsachse keine Relativverschiebung zum feststehenden Ventilgehäuse.

Der Anschlag kann beispielsweise durch einen Absatz bereitgestellt werden, wobei das Sicherungselement an diesem Absatz ansteht. Der Absatz kann analog zu einer der Rillenflanken ausgebildet sein.

Vorzugsweise weist das Aktuatorelement eine Aufnahmeöffnung für die Aufnahme des Betätigungsabschnittes des Ventilstössels auf. Der Ventilstössel ragt mit dem Betätigungsabschnitt in die Aufnahmeöffnung ein.

Besonders bevorzugt dient die Aufnahmeöffnung weiter der Aufnahme eines Bereichs der Aussenseite des Ventilgehäuses. Teile vom Ventilgehäuse ragen also in die Aufnahmeöffnung hinein. Besonders bevorzugt erstreckt sich ein zylindrischer Ansatz des Ventilgehäuses in die Aufnahmeöffnung hinein. Im besagten zylinderischen Ansatz ist zudem die Aufnahme für den Ventilstössel angeordnet. Der zylindrische Ansatz weist eine Zylinderfläche auf, welche sich um die Längsachse erstreckt. Die besagte Ausnehmung bzw. der besagte Anschlag sind dabei in der besagten Zylinderfläche angeordnet.

Besonders bevorzugt ragt das Sicherungselement teilweise in die Aufnahmeöffnung des Aktuatorelementes ein und ist relativ zur Aufnahmeöffnung verschiebbar, wobei das Sicherungselement in der Sicherungslage den Querschnitt der Aufnahmeöffnung verkleinert. Mit anderen Worten stellt das Sicherungselement mit den Teilen, die den Querschnitt verändern, einen Anschlag gegen eine Trennbewegung zwischen dem Aktuatorelement und dem Ventilgehäuse bereit.

In einer besonders bevorzugten Ausführungsform wird die Aufnahmeöffnung im Wesentlichen durch einen Basisabschnitt und einen sich vom Basisabschnitt wegerstreckenden Mantelabschnitt definiert. Gegenüber dem Basisabschnitt ist die Aufnahmeöffnung offen ausgebildet.

Besonders bevorzugt weist das Sicherungselement einen Betätigungsabschnitt und mindestens einen vom Betätigungsabschnitt abstehenden Sicherungsabschnitt auf, wobei der Betätigungsabschnitt von einer äusseren Oberfläche des Aktuatorelementes zugänglich ist. Der Installateur kann über den Betätigungsabschnitt das Sicherungselement von der Sicherungslage in die Freigabelage und umgekehrt bewegen.

In einer besonders bevorzugten Weiterbildung stehen vom Betätigungsabschnitt genau zwei beabstandet zueinander angeordnete Sicherungsabschnitte ab. Das Sicherungselement ist dabei als Bügel ausgebildet. Bezüglich der Längsachse gesehen greift ein Sicherungsabschnitt auf einer Seite in die Ausnehmung oder den Anschlag ein und der andere Sicherungsabschnitt greift auf der anderen Seite in die Ausnehmung oder den Anschlag ein.

Die beiden Sicherungsabschnitte sind seitlich zur Aufnahmeöffnung angeordnet. Mit anderen Worten erstreckt sich einer der Sicherungsabschnitte auf einer Seite der Längsachse und der andere der Sicherungsabschnitte auf der anderen Seite der Längsachse.

Der Sicherungsabschnitt ragt, wenn das Sicherungselement sich in der Sicherungslage befindet, in die Ausnehmung, insbesondere in die besagte Rille, am Ventilgehäuse ein.

Besonders bevorzugt weist das Sicherungselement mindestens einen Rastabschnitt auf, welcher in der Sicherungslage an einem Anschlagsabschnitt am Aktuatorelement ansteht und so das Sicherungselement gegen die Bewegung von der Sicherungslage in die Freigabelage sichert.

Der Rastabschnitt ist vorzugsweise an einem weiteren vom Betätigungsabschnitt abstehenden Arm angeformt und der Anschlagsabschnitt liegt vorteilhafterweise im Bereich der Aussenseite des Aktuatorelements.

Besonders bevorzugt ist zwischen dem Aktuatorelement und dem Ventilgehäuse zusätzlich zur Verbindung mit dem Sicherungselement eine Rastverbindung vorgesehen. Vorzugsweise wird die Rastverbindung durch eine Rastnasenpaarung bereitgestellt. Die Rastverbindung funktioniert neben der eigentlichen Sicherung über das besage Sicherungselement als zusätzliche Sicherung. Beim Aufsetzen des Aktuatorelements wird zuerst die Rastverbindung hergestellt und das Aktuatorelement ist schon mit dem Ventilgehäuse verbunden.

Vorzugsweise weist der Betätigungsabschnitt des Ventilstössels mindestens eine in Richtung der Längsachse orientierte Nute auf und das Aktuatorelement weist, vorzugsweise innerhalb der Aufnahmeöffnung, mindestens ein in Richtung der Längsachse orientierter Kamm, welcher in die mindestens eine Nute eingreift. Hierdurch wird sichergestellt, dass die Drehbewegung vom Aktuatorelement auf den Ventilstössel übertragen wird und dass eine Relativverschiebung zwischen Aktuatorelement und Ventilstössel bei der Betätigung des Aktuatorelements möglich wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines erfindungsgemässen Ventils mit einem Sicherungselement, welches sich in Sicherungslage befindet;
- Fig. 2: eine perspektivische Ansicht des Ventils nach Figur 1, wobei sich das Sicherungselement in Freigabelage befindet;
- Fig. 3: eine perspektivische Explosionsansicht des Ventils nach Figur 1;
- Fig. 4: eine Schnittdarstellung durch die Längsachse durch das Ventil nach Figur 1;
- Fig. 5: eine Schnittdarstellung quer zur Längsachse durch das Ventil nach Figur 1 mit dem Sicherungselement in Sicherungslage; und
- Fig. 6: eine Schnittdarstellung quer zur Längsachse durch das Ventil nach Figur 1 mit dem Sicherungselement in Freigabelage.

### BESCHREIBUNG BEVORZUGTER AUSFÜHRUNGSFORMEN

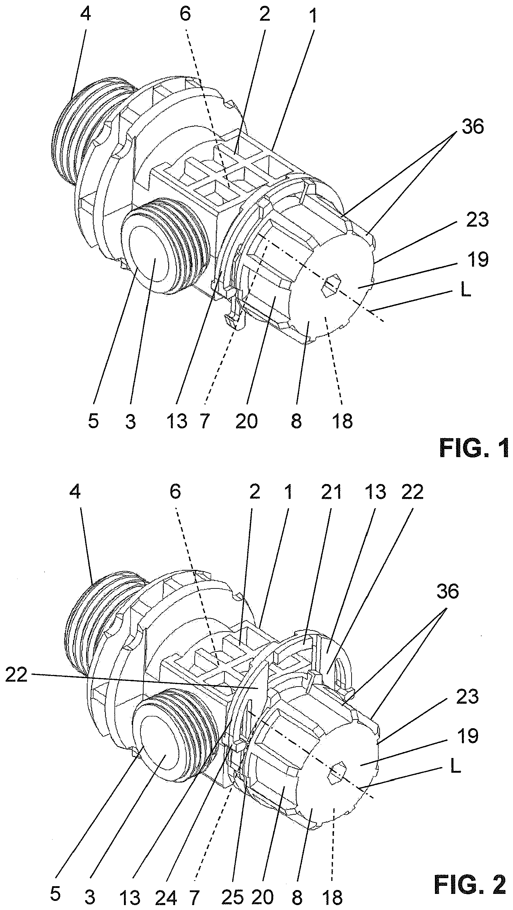

In der Figur 1 wird eine perspektivische Ansicht eines erfindungsgemässen Ventils 1 gezeigt. Das Ventil ist hier ein Eckventil und kann insbesondere in Spülkästen eingesetzt werden.

Das Ventil 1 umfasst ein Ventilgehäuse 2, das einen Durchflusskanal 3 begrenzt. Der Durchflusskanal 3 erstreckt sich von einem Ventileingang 4 bis zu einem Ventilausgang 5. Das Wasser kann vom Ventileingang 4 durch den Durchflusskanal 3 zum Ventilausgang 5 hindurchfliessen. Beim Ventileingang 4 und auch beim Ventilausgang 5 umfasst das Ventilgehäuse 2 jeweils ein Aussengewinde zum Anschluss an eine Wasserleitung bzw. an ein Einlaufgarnitur in einem Spülkasten. Der Durchflusskanal 3 wird im Ventilgehäuse 2 um 90° umgelenkt. Andere Winkel sind auch denkbar.

Im Durchflusskanal ist ein Ventilsitz 6 angeordnet. Das Eckventil umfasst weiter einen Ventilstössel 7, welcher mit dem Ventilsitz 6 zusammenarbeitet. Über die Zusammenarbeit zwischen Ventilsitz 6 und Ventilstössel 7 kann der Querschnitt des Durchflusskanals 3 variiert werden.

Weiter umfasst das Ventil 1 ein Aktuatorelement 8 zur Betätigung des Ventilstössels 7. Das Aktuatorelement 8 steht in der gezeigten Ausführungsform mit dem Ventilstössel 7 in Verbindung, so dass über das Aktuatorelement 8 die Position des Ventilstössels 7 relativ zum Ventilsitz 6 einstellbar ist.

In der vorliegenden Ausführung ist das Aktuatorelement 8 ein Handrad, welches vom Installateur betätigt werden kann. Bei der Betätigung bewegt sich dann der Ventilstössel relativ zum Ventilsitz 6, wodurch der Durchflussquerschnitt eingestellt werden kann.

Das Aktuatorelement 8 umfasst weiter ein relativ zum Aktuatorelement 8 von einer Freigabelage in eine Sicherungslage bzw. von der Sicherungslage in die Freigabelage bewegbares Sicherungselement 13. Mit dem Sicherungselement 13 kann das Aktuatorelement 8 zum Ventilgehäuse 2 gesichert werden. Das Sicherungselement 13 wird in der Figur 1 in der Sicherungslage gezeigt. In dieser Stellung kann das Aktuatorelement 8 nicht vom Ventilgehäuse 2 abgezogen werden. Es ist aber eine Drehung relativ zum Ventilgehäuse 2 möglich, so dass eine Drehung des Aktuatorelementes 8 auf den Ventilstössel 7 eine Bewegung desselben bewirkt.

In der Figur 2 wird eine weitere perspektivische Ansicht des Ventils 1 gezeigt. Im Unterschied zur Figur 1 befindet sich hier das Sicherungselement 13 in seiner Freigabelage. Das Sicherungselement 13 wurde dabei relativ zum Aktuatorelement 8 verschoben und es besteht kein Eingriff mehr zwischen dem Ventilgehäuse 2 und dem Aktuatorelement 8. Das Aktuatorelement 8 kann also vom Ventilgehäuse 2 abgezogen werden. Von der Freigabelage in der Figur 2 ist das Sicherungselement 13 wieder in die Sicherungslage gemäss der Figur 1 bewegbar.

Das Sicherungselement 13 ist bevorzugt derart ausgebildet, dass es in seiner Sicherungslage in das Ventilgehäuse 2 eingreift und zwar so, dass seine Drehbewegung um die Längsachse L nicht aber eine Längsbewegung entlang der Längsachse L zwischen dem Aktuatorelement und dem Ventilgehäuse 2 ermöglicht wird. Die Verbindung zwischen dem Aktuatorelement 8 und dem Ventilstössel ist derart ausgebildet, dass eine Drehbewegung vom Aktuatorelement 8 auf den Ventilstössel 7 übertragbar ist und dass der Ventilstössel entlang der Längsachse L relativ zum Aktuatorelement 8 verschiebbar ist. Mit anderen Worten heisst dies, dass bei einer Betätigung des Aktuatorelementes 8 ausschliesslich eine Drehbewegung zum Ventilgehäuse 2 ermöglicht wird und dass der Ventilstössel 7 entlang der Längsachse L zum Aktuatorelement 8 bewegbar ist.

Auf der Aussenseite 23 weist das Aktuatorelement 8 eine Mehrzahl von Erhebungen 36 auf, welche der Installateur zur Betätigung des Aktuatorelementes 8 ergreifen kann.

Das Aktuatorelemen 8 ist vorzugsweise aus Kunststoff hergestellt. Das Ventilgehäuse 2 und der Ventilstössel 7 sind vorzugsweise aus einem Metall, wie beispielsweise Messing. Das Ventilgehäuse 2 und/oder der Ventilstössel 7 können aber auch als Metall und Kunststoff hergestellt sein.

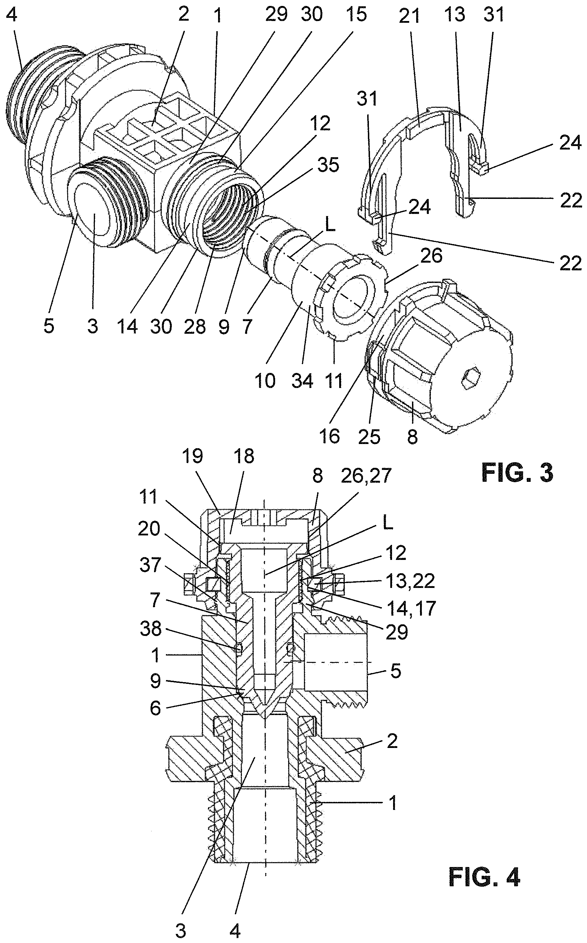

In der Figur 3 wird eine Explosionsdarstellung des Ventils 1 gezeigt.

Der Ventilstössel 7 umfasst in dieser Ausführungsform einen Dichtabschnitt 9, einen Lagerungsabschnitt 10 und einen Betätigungsabschnitt 11. Der Dichtabschnitt 9 bildet im Wesentlichen die Spitze des Ventilstössels 7 und dem Dichtabschnitt 9 schliesst sich der Lagerungsabschnitt 10 an und der Betätigungsabschnitt 11 bildet das hintere Ende des Ventilstössels 7. Mit dem Dichtabschnitt 9 arbeitet der Ventilstössel 7 mit dem Dichtsitz 6 des Ventilgehäuses zusammen. Der Ventilstössel 7 wird hier über eine zusätzliche Öffnung 28 in das Ventilgehäuse 2 eingeschoben und ragt dann in den Durchflusskanal 3 ein. Das Ventilgehäuse 2 weist in dieser zusätzlichen Öffnung eine Aufnahme 12 auf, in welcher der Ventilstössel 7 mit dem Lagerungsabschnitt 10 gelagert ist. Der Ventilstössel ist dabei einer Längsachse L, welche zugleich der Drehachse des Ventilstössels 7 entspricht, verschieblich gelagert bzw. um die und entlang der Längsachse verschieblich gelagert. Besonders bevorzugt ist die Paarung um Lagerungsabschnitt 10 und Aufnahme 12 eine Gewindepaarung, wobei der Lagerungsabschnitt 10 ein Aussengewinde 34 umfasst und die Aufnahme 12 ein Innengewinde 35 aufweist. Durch eine Drehung des Ventilstössels 7 und seiner Drehachse wird der Ventilstössel entlang der Längsachse L bewegt. Die Aufnahme 12 mündet in den Durchflusskanal 3.

Das Sicherungselement 13 wird in der Figur 3 beabstandet zum Aktuatorelement 8 gezeigt.

Das Sicherungselement 13 ist separat vom Aktuatorelement 8 ausgebildet und somit trennbar vom Aktuatorelement 8. Das heisst, das Sicherungselement 13 kann vom Aktuatorelement 8, insbesondere ohne Zerstörung von Material, entfernt werden bzw. zum Aktuatorelement 8 montiert und relativ dazu verschoben werden. Das separat vom Aktuatorelement 8 ausgebildete Sicherungselement 13 ist am Aktuatorelement 8 bewegbar gelagert. Hierzu umfasst das Aktuatorelement 8 eine Führung 16, in die das Sicherungselement 13 eingreift. Die Führung 16 ist hier als Längsführung ausgebildet und das Aktuatorelement 8 lässt sich entlang dieser Längsführung in einer geradlinigen Bewegung von der Sicherungslage in die Freigabelage beziehungsweise von der Freigabelage in die Sicherungslage bewegen. Die Längsführung ist rechtwinklig zur Längsachse L orientiert. Die Führung 16 kann aber auch anders ausgebildet sein.

Das Ventilgehäuse 2 umfasst im Bereich der Aufnahme 12 auf seiner Aussenseite 15 eine Ausnehmung 14, in welche das Sicherungselement 13 in seiner Sicherungslage eingreift und mit welcher das Sicherungselement 13 in seiner Freigabelage nicht im Eingriff steht. Durch diesen Eingriff lässt sich das Aktuatorelement 8 nicht entlang der Längsachse L relativ zum Ventilgehäuse 2 verschieben, wenn sich das Sicherungselement 13 in seiner Sicherungslage befindet.

Die Ausnehmung 14 ist hier im Bereich eines zylindrischen sich um die Längsachse L herumerstreckenden Ansatzes 29, der Teil des Ventilgehäuses 2 ist, angeordnet. Die Ausnehmung 14 weist dabei die Form einer Rille 17 auf, welche sich vollständig um die Längsachse L bzw. um den Ansatz 29 herum erstreckt. Die Rille 17 weist zwei Rillenflanken 30 auf, welche in Richtung der Längsachse L versetzt zueinander sind und an welchen das Sicherungselement 13 in der Sicherungslage anstehen kann. Über den Kontakt zwischen den Rillenflanken 30 und dem Sicherungselement 13 wird eine Längsverschiebung entlang der Längsachse L zwischen dem Aktuatorelement 8 und dem Ventilgehäuse 2 verhindert. Einerseits steht also das Sicherungselement 13 mit der Rille 17 in Verbindung und andererseits steht das Sicherungselement 13 mit der Führung 16 mit dem Aktuatorelement 8 in Verbindung und verhindert so ein relatives Verschieben zwischen dem Aktuatorelement 8 und dem Ventilgehäuse 2 an welchen die Rille 17 angeordnet ist.

In der Figur 4 wird eine Schnittansicht entlang der Längsachse L durch das Ventil 1 gezeigt.

Das Aktuatorelement 8 weist, wie in der Figur 4 gezeigt, eine Aufnahmeöffnung 18 für die Aufnahme des Betätigungsabschnittes 11 des Ventilstössels 7 auf. Die Aufnahmeöffnung 18 dient weiter der Aufnahme eines Bereichs der Aussenseite 15 des Ventilgehäuses 2. Hier ragen Teile des Ansatzes 29 mit der Ausnehmung 14 bzw. der Rille 17 in die Aufnahmeöffnung 18 des Aktuatorelementes 8 ein. Das Sicherungselement 13 greift, so wie in der Figur gezeigt wird, mit einem Sicherungsabschnitt 22 in die Rille 17 ein. Bei einer Drehung des Aktuatorelementes 9 um die Längsachse L wird der Ventilstössel 7 ebenfalls um die Längsachse bewegt und aufgrund der Zusammenarbeit zwischen dem Lagerungsabschnitt 10 des Ventilstössels 7 und der Aufnahme 12 des Ventilgehäuses 2 wird der Ventilstössel 7 entlang der Längsachse L bewegt. Bei einer Drehung wird also der Ventilstössel entlang der Längsachse L vom Ventilsitz 6 weg bewegt und der Durchflusskanal 3 wird geöffnet. Bei der Betätigung des Aktuatorelementes 9 wird dieses Aufgrund des Sicherungselementes 13 und dessen Führung in der Rille 17 lediglich um, nicht aber entlang, der Längsachse L bewegt.

Die Aufnahmeöffnung 18 wird durch einen Basisabschnitt 19 und einen sich vom Basisabschnitt 19 weg erstreckenden Mantelabschnitt 20 gebildet.

In der Figur 4 kann auch gut erkannt werden, dass das Sicherungselement 13 teilweise in die Aufnahmeöffnung 18 des Aktuatorelmentes 9 einragt und relativ zu der Aufnahmeöffnung 18, nämlich von der Sicherungslage in die Freigabelage bzw. umgekehrt, verschiebbar ist. Das Sicherungselement 13 verkleinert in der Sicherungslage den Querschnitt der Aufnahmeöffnung 18 und stellt somit einen Anschlag in Zusammenarbeit mit der Rille 17 bereit.

In der Figur 4 kann zudem erkannt werden, dass zwischen dem Aktuatorelement 8 und Ventilgehäuse 4 eine Rastverbindung vorgesehen ist. Die Rastverbindung wird durch eine Rastnasenpaarung 37 bereitgestellt. Je eine Rastnase ist dabei dem Ventilgehäuse 4 und dem Aktuatorelement 8 angeformt. Die Rastverbindung funktioniert neben der eigentlichen Sicherung über das besage Sicherungselement 13 als zusätzliche Sicherung. Beim Aufsetzen des Aktuatorelements 8 wird zuerst die Rastverbindung hergestellt und das Aktuatorelement 8 ist schon mit dem Ventilgehäuse 4 verbunden. Die Verbindung wird dann noch durch das Sicherungselement 13 gesichert.

Durch die Rastverbindung wird weiter verhindert, dass bei einer Demontage des Aktuatorelementes 8 dieses, wenn sich das Sicherungselement 13 in der Freigabelage befindet, einfach ohne zusätzliche Krafteinwirkung vom Ventilgehäuse 2 löst. Bei der Demontage des Aktuatorelementes 8 und ggf. des Ventilstössel 7 kann das Aktuatorelement 8 betätigt werden, bis der Betätigungsabschnitt 11 des Ventilstössels 7 mit dem Basisabschnitt 19 des Aktuatorelements 8 in Kontakt kommt. Beim weiteren Drehen wird dann das Aktuatorelement 8 in Richtung der Längsachse L durch den Ventilstössel 7 und dessen Vortrieb durch die Paarung Betätigungsabschnitt 11 und Aufnahme 12 vom Ventilgehäuse 2 weg gedrückt, wodurch die Rastverbindung über die Rastnasenpaarung 37 aufgehoben wird.

Der Ventilstössel 7 umfasst hier weiter ein Dichtungselement 38, welches den Spalt zwischen der Aufnahme 12 und dem Ventilstössel 7 abdichtet.

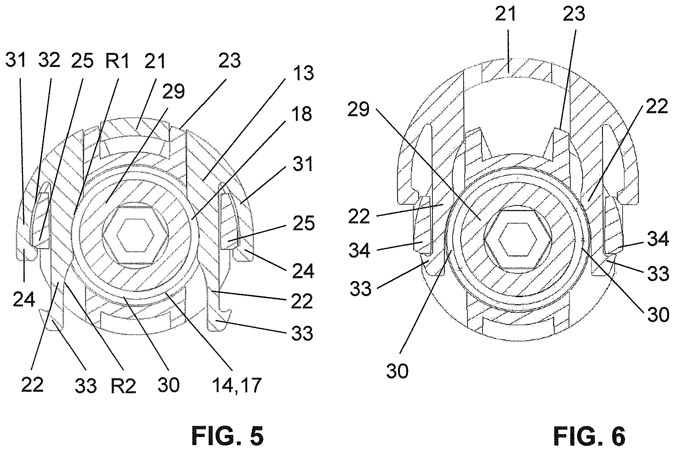

Anhand der Figuren 5 und 6 wird nun das Sicherungselement 13 und dessen Zusammenwirken mit der Ausnehmung 14, welche hier als Rille 17 ausgebildet ist, noch genauer erläutert. Das Sicherungselement 13 gemäss der vorliegenden Ausführungsform umfasst einen Betätigungsabschnitt 21 und zwei vom Betätigungsabschnitt 21 abstehende Sicherungsabschnitte 22. Der Betätigungsabschnitt 21 ist dabei derart im Aktuatorelement 8 angeordnet, dass dieser von einer äusseren Oberfläche 23 des Aktuatorelementes 8 zugänglich ist. Der Installateur kann also über den Betätigungsabschnitt 21 das Sicherungselement 13 von der Freigabelage in die Sicherungslage bzw. von der Sicherungslage in die Freigabelage bewegen.

In der Figur 5 wird das Sicherungselement 13 in seiner Sicherungslage gezeigt. Das Sicherungselement 13 ragt mit den Sicherungsabschnitten 22 in die Aufnahmeöffnung 18 ein und verkleinert den Querschnitt derselben. Die Sicherungsabschnitte 22 ragen dabei in die Ausnehmung 14 ein. In der vorliegenden Ausführungsform stehen dabei die Sicherungsabschnitte 22 an den Rillenflanken 30 entsprechend an.

In der Figur 6 wird das Sicherungselement 13 in der Freigabelage gezeigt. Die Sicherungsabschnitte 22 liegen dabei derart, dass diese nicht mehr in die Ausnehmung 14 eingreifen. Es existiert also kein Kontakt mehr zwischen den Rillenflanken 30 und den Sicherungsabschnitten 22, welcher ein Hindernis für eine Bewegung entlang der Längsachse L bereitstellen würde.

Das Sicherungselement 13 weist zudem mindestens einen Rastabschnitt 24 auf. Hier ist jeweils ein Rastabschnitt 24 an einem separaten Arm 31, der sich vom Betätigungsabschnitt 22 erstreckt, angeordnet. Die Rastabschnitte 24 arbeiten in der Sicherungslage mit einem Anschlagsabschnitt 25 zusammen. Der Anschlagsabschnitt 25 ist dabei Teil des Aktuatorelementes 8. Über die Paarung Rastabschnitt 24 und Anschlagsabschnitt 25 wird eine Rastverbindung bereitgestellt und das Sicherungselement 13 wird in seiner Sicherungslage gehalten. Bei Aufwenden einer entsprechenden Kraft auf den Betätigungsabschnitt 21 kann dann diese Rastverbindung aufgehoben werden und das Sicherungselement 13 kann von seiner Sicherungslage, wie in der Figur 5 gezeigt, in die Freigabelage, wie in der Figur 6 gezeigt, bewegt werden. Bei der Bewegung von der Freigabelage in die Sicherungslage werden die beiden Rastabschnitte 25 über eine seitliche Flanke 32 nach aussen bewegt. Sobald die Sicherungsabschnitte 22 die Flanke 32 überwunden haben gehen diese in einen Eingriff mit dem Anschlagsabschnitt 25 über.

Am freien Ende der Sicherungsabschnitte 22 umfasst der Sicherungsabschnitt 22 ein Rückhalteelement 33. Das Rückhalteelement 33 ist hier als Haken, der sich vom Sicherungsabschnitt 22 nach aussen erstreckt, ausgebildet. Der Sicherungsabschnitt 22 kann mit einer Anschlagsfläche 34 in Kontakt gebracht werden, sodass das Sicherungselement 13 von seiner Freigabelage nicht unbeabsichtigt weiter nach aussen bewegt werden kann, wodurch die Verbindung zwischen dem Sicherungselement 13 und dem Aktuatorelement 8 nicht unbeabsichtigt getrennt werden kann.

Der Sicherungsabschnitt 22 weist in der vorliegenden Ausführungsform eine definierte innere Kontur auf. Die innere Kontur weist im Wesentlichen zwei Ausnehmungen mit unterschiedlichen Radien Rl, R2 auf. Der Radius R2, welcher sich am unteren Ende des Sicherungsabschnittes 22 befindet ist dabei derart gewählt, dass dieser grösser oder gleich gross ist als der maximale Radius des Ventilstössels 7 beziehungsweise des Ansatzes 29 des Ventilgehäuses 2. Hierdurch wird sichergestellt, dass die Sicherungsabschnitte 22, wenn sich das Sicherungselement 13 in der Freigabelage befindet, kein Hindernis beim abziehen des Aktuatorelementes 8 ist. Der Radius R1 des Sicherungsabschnittes 22 ist dabei kleiner als der Radius R2 ausgebildet und entspricht im Wesentlichen dem Innendurchmesser der Ausnehmung 14 beziehungsweise der Rille 17.

**BEZUGSZEICHENLISTE**

| | | | |
|---|---|---|---|
| 1 | Ventil | 27 | Kamm |
| 2 | Ventilgehäuse | 28 | zusätzliche Öffnung |
| 3 | Durchflusskanal | 29 | Ansatz |
| 4 | Ventileingang | 30 | Rillenflanken |
| 5 | Ventilausgang | 31 | Arm |
| 6 | Ventilsitz | 32 | Flanke |
| 7 | Ventilstössel | 33 | Rückhalteelement |
| 8 | Aktuatorelement | 34 | Aussengewinde |
| 9 | Dichtabschnitt | 35 | Innengewinde |
| 10 | Gewindeabschnitt | 36 | Erhebungen |
| 11 | Betätigungsabschnitt | 37 | Rastnasenpaarung |
| 12 | Gewinde | 38 | Dichtungselement |
| 13 | Sicherungselement | L | Längsachse |
| 14 | Ausnehmung | | |
| 15 | Aussenseite | | |
| 16 | Längsführung | | |
| 17 | Rille | | |
| 18 | Aufnahmeöffnung | | |
| 19 | Basisabschnitt | | |
| 20 | Mantelabschnitt | | |
| 21 | Betätigungsabschnitt | | |
| 22 | Sicherungsabschnitt | | |
| 23 | äussere Oberfläche | | |
| 24 | Rastabschnitt | | |
| 25 | Anschlagsabschnitt | | |
| 26 | Nute | | |

## Patentansprüche

1. Ventil (1), insbesondere ein Eckventil, umfassend
ein Ventilgehäuse (2), das einen Durchflusskanal (3) begrenzt, welcher sich von einem Ventileingang (4) bis zu einem Ventilausgang (5) erstreckt,
ein im Durchflusskanal (3) angeordneter Ventilsitz (6),
ein mit dem Ventilsitz (6) zusammenarbeitenden Ventilstössel (7), und
ein mit dem Ventilstössel (7) und/oder mit dem Ventilgehäuse (2) verbindbares Aktuatorelement (8) zur Betätigung des Ventilstössels (7),
wobei der Ventilstössel (7) einen mit dem Ventilsitz (6) zusammenarbeitenden Dichtabschnitt (9), einen Lagerungsabschnitt (10) und einen Betätigungsabschnitt (11), mit welchem das Aktuatorelement (8) zusammenarbeitet, umfasst, und wobei das Ventilgehäuse (2) weiter eine Aufnahme (12) aufweist, in welcher der Ventilstössel (7) mit dem Lagerungsabschnitt (10) im Ventilgehäuse (2) entlang einer Längsachse (L) verschieblich bzw. um die und entlang der Längsachse (L) verschieblich gelagert ist,
wobei das Aktuatorelement (8) ein relativ zum Aktuatorelement (8) von einer Freigabelage in eine Sicherungslage bewegbares Sicherungselement (13) umfasst, mit welchem das Aktuatorelement (8) zum Ventilstössel (7) und/oder zum Ventilgehäuse (2) sicherbar ist,
**dadurch gekennzeichnet,**
**dass** das Sicherungselement (13) in seiner Sicherungslage derart in das Ventilgehäuse (2) eingreift, dass eine Drehbewegung um die Längsachse (L), nicht aber eine Längsbewegung entlang der Längsachse (L) zwischen dem Aktuatorelement (8) und dem Ventilgehäuse (2) ermöglicht wird und dass die Verbindung zwischen Aktuatorelement (8) und Ventilstössel (7) derart ausgebildet, dass eine Drehbewegung vom Aktuatorelement (8) auf den Ventilstössel (7) übertragbar ist und dass der Ventilstössel (7) entlang der Längsachse (L) relativ zum Aktuatorelement (8) verschiebbar ist.

2. Ventil (1) nach Anspruch 1, **dadurch gekennzeichnet, dass** das Sicherungselement (13) separat vom Aktuatorelement (8) ausgebildet ist, und dass das separat vom Aktuatorelement (8) ausgebildete Sicherungselement (13) am Aktuatorelement (9) bewegbar gelagert ist.

3. Ventil (1) nach Anspruch 1 oder 2, **dadurch gekennzeichnet, dass** das Aktuatorelement (8) eine Führung (16), insbesondere eine Längsführung, umfasst, in welcher und entlang welcher das Sicherungselement (13) bewegbar gelagert ist.

4. Ventil (1) nach einem der vorhergehenden Ansprüche, **dadurch gekennzeichnet, dass** das Ventilgehäuse (2) eine Ausnehmung (14) oder einen Anschlag umfasst, in welche(n) das Sicherungselement (13) in seiner Sicherungslage eingreift und mit welcher das Sicherungselement (13) in seiner Freigabelage nicht im Eingriff steht.

5. Ventil (1) nach Anspruch 4, **dadurch gekennzeichnet, dass** die Ausnehmung (14) eine um die Längsachse des Ventilstössels (7) umlaufende an der Aussenseite (15) des Ventilgehäuses (2) angeordnete Rille (17) ist.

6. Ventil (1) nach einem der vorhergehenden Ansprüche, **dadurch gekennzeichnet, dass** das Aktuatorelement (8) eine Aufnahmeöffnung (18) für die Aufnahme des Betätigungsabschnittes (11) aufweist.

7. Ventil (1) nach Anspruch 6, **dadurch gekennzeichnet, dass** die Aufnahmeöffnung (18) weiter der Aufnahme eines Bereichs der Aussenseite (15) des Ventilgehäuses (2) dient.

8. Ventil (1) nach einem der Ansprüche 6 oder 7, **dadurch gekennzeichnet, dass** das Sicherungselement (13) teilweise in die Aufnahmeöffnung (18) einragt und relativ zur Aufnahmeöffnung (18) verschiebbar ist, wobei das Sicherungselement (13) in der Sicherungslage den Querschnitt der Aufnahmeöffnung (18) verkleinert.

9. Ventil (1) nach einem der Ansprüche 6 bis 8, **dadurch gekennzeichnet, dass** die Aufnahmeöffnung (18) im Wesentlichen durch einen Basisabschnitt (19) und eine sich vom Basisabschnitt (19) wegerstreckenden Mantelabschnitt (20) definiert wird, wobei die Aufnahmeöffnung (18) gegenüber dem Basisabschnitt (19) offen ausgebildet ist.

10. Ventil (1) nach einem der vorhergehenden Ansprüche, **dadurch gekennzeichnet, dass** das Sicherungselement (13) ein Betätigungsabschnitt (21) und mindestens einen vom Betätigungsabschnitt (21) abstehenden Sicherungsabschnitt (22) aufweist, wobei der Betätigungsabschnitt (21) von einer äusseren Oberfläche (23) des Aktuatorelementes (8) zugänglich ist.

11. Ventil (1) nach Anspruch 10, **dadurch gekennzeichnet, dass** vom Betätigungsabschnitt (21) genau zwei beabstandet zueinander angeordnete Sicherungsabschnitte (22) abstehen.

12. Ventil (1) nach Anspruch 11 und einem der Ansprüche 5 bis 8, **dadurch gekennzeichnet, dass** beide Sicherungsabschnitte (22) seitlich zur Aufnahmeöffnung (18) angeordnet sind.

13. Ventil (1) nach einem der vorhergehenden Ansprüche, **dadurch gekennzeichnet, dass** das Sicherungselement (13) mindestens einen Rastabschnitt (24) aufweist, welcher in der Sicherungslage an einem Anschlagsabschnitt (25) am Aktuatorelement (8) ansteht und so das Sicherungselement (13) gegen die Bewegung von der Sicherungslage in die Freigabelage sichert.

14. Ventil (1) nach Anspruch 13, **dadurch gekennzeichnet, dass** der Rastabschnitt (24) an einem weiteren vom Betätigungsabschnitt (21) abstehenden Arm (31) angeformt ist.

15. Ventil (1) nach einem der vorhergehenden Ansprüche, **dadurch gekennzeichnet,**
**dass** zwischen dem Aktuatorelement (8) und dem Ventilgehäuse (2) zusätzlich zur Verbindung mit dem Sicherungselement (13) eine Rastverbindung (37) vorgesehen ist und/oder
**dass** der Betätigungsabschnitt (11) des Ventilstössels (7) mindestens eine in Richtung der Drehachse (D) orientierten Nute (26) aufweist und dass das Aktuatorelement (8) mindestens ein in Richtung der Drehachse (D) orientierter Kamm (27) aufweist, welcher in die mindestens eine Nute (26) eingreift.

## Claims

1. Valve (1), in particular an angle valve, comprising
a valve housing (2) defining a flow channel (3) extending from a valve inlet (4) to a valve outlet (5),
a valve seat (6) arranged in the flow channel (3),
a valve tappet (7) cooperating with the valve seat (6), and
an actuator element (8) connectable to the valve tappet (7) and/or to the valve housing (2) for actuating the valve tappet (7),
wherein the valve tappet (7) comprises a sealing portion (9) cooperating with the valve seat (6), a bearing portion (10) and an actuating portion (11) with which the actuator element (8) cooperates, and wherein the valve housing (2) further comprises a receiving portion (12), in which the valve tappet (7) is movably mounted with the bearing portion (10) in the valve housing (2) so that it can be moved along a longitudinal axis (L) resp. around and along the longitudinal axis (L),
wherein the actuator element (8) comprises a securing element (13) that can be moved relative to the actuator element (8) from an release position into a securing position, with which the actuator element (8) can be secured towards the valve tappet (7) and/or towards the valve housing (2),
**characterized in that**
the securing element (13) in its securing position engages with the valve housing (2) in such a way that a rotational movement around the longitudinal axis (L) but not a longitudinal movement along the longitudinal axis (L) between the actuator element (8) and the valve housing (2) is made possible and **in that** the connection between actuator element (8) and valve tappet (7) is designed in such a way that a rotational movement can be transmitted from the actuator element (8) to the valve tappet (7) and **in that** the valve tappet (7) can be moved along the longitudinal axis (L) relative to the actuator element (8).

2. Valve (1) according to claim 1, **characterized in that** the securing element (13) is formed separately from the actuator element (8), and that securing element (13) that is formed separately from the actuator element (8) formed is movably mounted on the actuator element (8).

3. Valve (1) according to claim 1 or 2, **characterized in that** the actuator element (8) comprises a guide (16), in particular a longitudinal guide, in which and along which the securing element (13) is movably mounted.

4. Valve (1) according to one of the preceding claims, **characterized in that** the valve housing (2) comprises a recess (14) or a stop, with which the securing element (13) engages with in its securing position and with which the securing element (13) does not engage with in its release position.

5. Valve (1) according to claim 4, **characterized in that** the recess (14) is a circumferential groove (17) that is arranged around the longitudinal axis of the valve tappet (7) on the outer side (15) of the valve housing (2).

6. Valve (1) according to one of the preceding claims, **characterized in that** the actuator element (8) comprises a receiving opening (18) for receiving the actuating portion (11).

7. Valve (1) according to claim 6, **characterized in that** the receiving opening (18) further serves for receiving a portion of the outer side (15) of the valve housing (2).

8. Valve (1) according to any one of claims 6 or 7, **characterized in that** the securing element (13) partially protrudes into the receiving opening (18) and is moveable relative to the receiving opening (18), wherein the securing element (13) in the securing position reduces the cross-section of the receiving opening (18).

9. Valve (1) according to any one of claims 6 to 8, **characterized in that** the receiving opening (18) is substantially defined by a base portion (19) and a lateral portion (20) extending from the base portion (19), wherein the receiving opening (18) is formed in an open manner relative to the base portion (19).

10. Valve (1) according to one of the preceding claims, **characterized in that** the securing element (13) comprises an actuating portion (21) and at least one securing portion (22) protruding from the actuating portion (21), wherein the actuating portion (21) is accessible from an outer Surface (23) of the actuator element (8).

11. Valve (1) according to claim 10, **characterized in that** from the actuating portion (21) exactly two securing portions (22) protrude, which are arranged at a distance to one another.

12. Valve (1) according to claim 11 and one of claims 5 to 8, **characterized in that** both securing portions (22) are arranged laterally to the receiving opening (18).

13. Valve (1) according to any one of the preceding claims, **characterized in that** the securing element (13) comprises at least one latching portion (24), which, in the securing position, latches on a stopping portion (25) at the actuator (8) and thereby secures the securing element (13) from the movement from the securing position into the release position.

14. Valve (1) according to claim 13, **characterized in that** the latching portion (24) is formed on an arm (31) that protrudes from the actuating portion (21).

15. Valve (1) according to one of the preceding claims, **characterized**
**in that** a latching connection (37) between the actuator element (8) and the valve housing (2) is provided in addition to the connection with the securing element (13), and/or
**in that** the actuating portion (11) of the valve tappet (7) comprises at least one groove (26) oriented in the direction of the axis of rotation (D) and in that the actuator element (8) comprises at least one comb (27) oriented in the direction of the axis of rotation (D), which engages with the at least one groove (26).

## Revendications

1. Vanne (1), en particulier vanne d'angle, comprenant
un boîtier de vanne (2), délimitant un canal d'écoulement (3), s'étendant d'une entrée de vanne (4) à une sortie de vanne (5),
un siège de vanne (6) disposé dans le canal d'écoulement (3),
une tige de vanne (7) coopérant avec le siège de vanne (6), et
un élément d'actionnement (8) pouvant être relié à la tige de vanne (7) et/ou au boîtier de vanne (2) pour actionner la tige de vanne (7),
dans laquelle la tige de vanne (7) comprend une partie d'étanchéité (9) coopérant avec le siège de vanne (6), une partie de palier (10) et une partie d'actionnement (11), avec laquelle l'élément d'actionnement (8) coopère, et dans laquelle le boîtier de vanne (2) comprend en outre un logement (12) dans lequel le tige de vanne (7) est montée de manière coulissante avec la partie de palier (10) dans le boîtier de vanne (2) le long d'un axe longitudinal (L) ou est montée de manière coulissante autour et le long de l'axe longitudinal (L),
dans laquelle l'élément d'actionnement (8) comprend un élément de fixation (13) mobile par rapport à l'élément d'actionnement (8) pouvant être déplacé d'une position de libération vers une position de fixation, avec lequel l'élément d'actionnement (8) peut être fixé à la tige de vanne (7) et/ou au boîtier de vanne (2), **caractérisée en ce que**,
l'élément de fixation (13) s'engage dans sa position de fixation dans le boîtier de vanne (2) de telle sorte qu'un mouvement de rotation autour de l'axe longitudinal (L), mais non pas un mouvement longitudinal le long de l'axe longitudinal (L) entre l'élément d'actionnement (8) et le boîtier de vanne (2), est rendu possible et **en ce que** la liaison entre l'élément d'actionnement (8) et la tige de vanne (7) est conçue de telle sorte que qu'un mouvement de rotation peut être transmis de l'élément d'actionnement (8) à la tige de vanne (7) et que la tige de vanne (7) peut être coulissée le long de l'axe longitudinal (L) par rapport à l'élément d'actionnement (8).

2. Vanne (1) selon la revendication 1, **caractérisée en ce que** l'élément de fixation (13) est formé séparément de l'élément d'actionnement (8), et **en ce que** l'élément de fixation (13) formé séparément de l'élément d'actionnement (8) est monté de manière mobile sur l'élément d'actionnement (9).

3. Vanne (1) selon la revendication 1 ou 2, **caractérisée en ce que** l'élément d'actionnement (8) comprend un guide (16), en particulier un guide longitudinal, dans lequel et le long duquel l'élément de fixation (13) est monté de manière mobile.

4. Vanne (1) selon l'une des revendications précédentes, **caractérisée en ce que** le boîtier de vanne (2) comprend un évidement (14) ou une butée dans laquelle l'élément de fixation (13) s'engage dans sa position de fixation et avec laquelle l'élément de fixation (13) ne s'engage pas dans sa position de libération.

5. Vanne (1) selon la revendication 4, **caractérisée en ce que** l'évidement (14) est une rainure (17) disposée à l'extérieur (15) du boîtier de vanne (2) autour de l'axe longitudinal de la tige de vanne (7).

6. Vanne (1) selon l'une des revendications précédentes, **caractérisée en ce que** l'élément d'actionnement (8) présente une ouverture de réception (18) pour recevoir la partie d'actionnement (11).

7. Vanne (1) selon la revendication 6, **caractérisée en ce que** l'ouverture de réception (18) sert en outre à recevoir une zone du côté extérieur (15) du boîtier de vanne (2).

8. Vanne (1) selon l'une des revendications 6 ou 7, **caractérisée en ce que** l'élément de fixation (13) pénètre partiellement dans l'ouverture de réception (18) et peut être déplacé par rapport à l'ouverture de réception (18), l'élément de fixation (13) réduisant la section transversale de l'ouverture de réception (18) dans la position de fixation.

9. Vanne (1) selon l'une des revendications 6 à 8, **caractérisée en ce que** l'ouverture de réception (18) est essentiellement définie par une partie de base (19) et une partie circonférentielle (20) s'étendant à l'écart de la partie de base (19), l'ouverture de réception (18) étant formée de manière ouverte par rapport à la partie de base (19).

10. Vanne (1) selon l'une des revendications précédentes, **caractérisée en ce que** l'élément de fixation (13) présente une partie d'actionnement (21) et au moins une partie de fixation (22) dépassant la partie d'actionnement (21), la partie d'actionnement (21) étant accessible depuis une surface extérieure (23) de l'élément d'actionnement (8).

11. Vanne (1) selon la revendication 10, **caractérisée en ce que** exactement deux parties de fixation (22) espacées l'une de l'autre dépassent de la partie d'actionnement (21).

12. Vanne (1) selon la revendication 11 et l'une des revendications 5 à 8, **caractérisée en ce que** les deux parties de fixation (22) sont disposées latéralement par rapport à l'ouverture de réception (18).

13. Vanne (1) selon l'une des revendications précédentes, **caractérisée en ce que** l'élément de fixation (13) présente au moins une partie d'encliquetage (24) qui, dans la position de fixation, repose sur une partie de butée (25) sur l'élément d'actionnement (8) et bloque ainsi l'élément de fixation (13) contre un mouvement de la position de fixation vers la position de libération.

14. Vanne (1) selon la revendication 13, **caractérisée en ce que** la partie d'encliquetage (24) est formée sur un bras (31) faisant saillie depuis la partie d'actionnement (21).

15. Vanne (1) selon l'une des revendications précédentes, **caractérisée en ce que**
entre l'élément d'actionnement (8) et le boîtier de vanne (2), une liaison par encliquetage (37) est prévue en plus à la liaison à l'aide de l'élément de fixation (13) et/ou
la partie d'actionnement (11) de la tige de vanne (7) présente au moins une encoche (26) orientée en direction de l'axe de rotation (D) et l'élément d'actionnement (8) présente au moins une crête (27) orientée en direction de l'axe de rotation (D), laquelle s'engage dans l'au moins une encoche (26)
